# EUROPEAN PATENT APPLICATION

(11) **EP 4 066 606 A1**
(43) Date of publication of application: **05.10.2022**
(21) Application number: 21166430.5
(22) Date of filing: 31.03.2021
(51) Int. Cl.: A01B 15/18, A01B 63/32, A01B 61/04

(54) **MOUNTING ASSEMBLY FOR PLOUGH SKIMMERS**

(71) Applicant: CNH Industrial Sweden AB, 590 96 Överum (SE)
(72) Inventor: Hertzog, Daniel, 59376 Blackstad (SE)
(74) Representative: CNH Industrial IP Department

(57) **Abstract**

The present disclosure relates to a mounting assembly (100, 400, 500) for a plough skimmer, the mounting assembly (100, 400, 500) comprising: a base support (102, 402, 502) for connecting the mounting assembly (100, 400, 500) to a plough implement; a first skimmer support (104, 404, 504) for removably connecting a first skimmer (202) to the mounting assembly (100, 400, 500); and a first parallelogram linkage (106, 406, 506) extending between the base support (102, 402, 502) and the first skimmer support (104, 404, 504), said first parallelogram linkage (106, 406, 506) being pivotable with respect the base support (102, 402, 502). The present disclosure also relates to a skimmer arrangement and an agricultural plough implement comprising the mounting assembly.

## Description

### Background of the Invention

The present disclosure relates to a mounting assembly for plough skimmer, particularly a mounting assembly for mounting skimmers to a plough implement in a height adjustable manner. Other aspects of the present disclosure relate to a skimmer arrangement and plough implement comprising the mounting assembly.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern ploughs typically include a plurality of plough bodies connected to a plough frame such that they are laterally offset manner from each other when the plough is in use. Each plough body is connected to the plough frame via corresponding beams. The plough frame, in turn, is connected to a towing or pushing vehicle via a hitch arranged at a front or back end of the frame.

In addition to the plough bodies, it is known to use so-called "plough skimmers". Typically, one skimmer is placed in front of every plough body. The purpose of the plough skimmers is primarily to cut a shallow layer off the top of the ground surface before the latter is turned over by the plough bodies. The use of plough skimmers results in a more even ploughing result and reduces the amount of plant residues left on the ground surface after ploughing. Accordingly, the use of skimmers further reduces the possibility of inadvertent plant growth in ploughed fields.

Depending on the contours of the work area and the status of the soil, there is a need for adjustment of several of the plough components to achieve the desired tillage results. For example, harder soils may require the ground engaging tools of the plough to be lifted so as to reduce the drag and increasing service life of such ground engaging tools. Similarly, if the operating on uneven fields, it may be necessary to frequently adjust the working depth of the ground engaging tools, to ensure homogenously deep furrows.

Some of the above environmental factors, such as the soil status, can be challenging to determine. Often, the operator has to rely on their own knowledge of the work area to estimate the soil condition during the ploughing operation.

In view of the aforementioned problem, there is a need for a simplified means of determining the operating conditions of the field.

It is an aim of the present invention to solve or at least ameliorate one or more of problems discussed above.

### Summary of the Invention

Aspects and embodiments of the disclosure provide a mounting assembly for plough skimmer, particularly a mounting assembly for mounting skimmers to a plough implement in a height adjustable manner, as claimed in the appended claims. Other aspects of the present disclosure relate to a skimmer arrangement and plough implement comprising the mounting assembly.

According to one aspect of the present disclosure, there is provided a mounting assembly for a plough skimmer, the mounting assembly comprising:
a base support for connecting the mounting assembly to a plough implement;
a first skimmer support for removably connecting a first plough skimmer to the mounting assembly; and
a first parallelogram linkage extending between the base support and the first skimmer support, said first parallelogram linkage being pivotable with respect the base support.

In another embodiment, the first parallelogram linkage comprises
a first link having a first end pivotally connected to the base support and a second end pivotally connected to the first skimmer support;
a second link having a first end pivotally connected to the base support and a second end pivotally connected to the first skimmer support,
wherein the first and second links have the same length and are arranged in parallel.

In another embodiment the first skimmer support is a bar link extending between the second ends of the first and second links.

In another embodiment, the first end of the first link is spaced from the first end of the second link by a distance that is equal to a distance between the second end of the first link and the second end of the second link.

In another embodiment, the mounting assembly comprises an actuator mechanism configured to pivot the first parallelogram linkage with respect to the base support.

In another embodiment, the mounting assembly comprises:
a second skimmer support for removably connecting a second plough skimmer to the mounting assembly; and
a second parallelogram linkage extending between the base support and the second skimmer support, said parallelogram linkage being pivotable with respect the base support.

In another embodiment, the actuator mechanism is configured to pivot the second parallelogram linkage with respect to the base support.

In another embodiment, the actuator mechanism comprises a telescopic actuator for pivoting the first parallelogram linkage with respect to the base support.

In another embodiment, the actuator mechanism comprises synchronising means for synchronising pivoting movement of the first and second parallelogram linkage.

In another embodiment, the synchronising means comprises:
a first synchronisation member having a first end and a second end, the second end being pivotally connected to the first parallelogram linkage; and
a second synchronisation member having a first end pivotally connected to the first end of the first synchronisation member and a second end pivotally connected to the second parallelogram linkage.

In another embodiment, the actuator mechanism comprises a telescopic actuator, and wherein the first ends of the first and second synchronisation members are connected to the telescopic actuator.

In another embodiment, the first ends of the first and second synchronisation members are connected to the base support, preferably via a longitudinal opening of the base support.

In another embodiment, the actuator mechanism comprises a telescopic actuator, said telescopic actuator having an end connected to the first or the second parallelogram linkage.

According to another aspect of the present disclosure, there is provided a skimmer arrangement comprising any of the above mounting assemblies and an agricultural skimmer attached to the first skimmer support.

According to another aspect of the present disclosure, there is provided an agricultural plough implement, comprising:
a plough main frame;
a plough body attached to the plough main frame via a beam; and
the above skimmer arrangement, wherein the base support of the skimmer arrangement is arranged on the beam.
In other embodiments of the disclosure, an agricultural machinery is provided comprising the above plough implement connected to the front and/or rear of an agricultural vehicle, e.g. a tractor.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of the Drawings

One or more embodiments of the present disclosure will now be described by way of example only, with reference to the accompanying drawings, in which:
Figure 1A shows a left-side view of an exemplary plough implement;
Figure 1B shows a right-side view of the plough implement of Figure 1A;
Figure 1C shows a top view of the plough implement of Figure 1A;
Figure 2 shows a schematic trajectory of an agricultural machinery when working a field;
Figure 3 shows a schematic side view of a mounting assembly according to an embodiment of the present disclosure; and
Figure 4 shows a schematic side view of a skimmer arrangement according to an embodiment of the present disclosure
Figure 5 is a schematic side view of a mounting assembly according to an embodiment of the present disclosure,
Figure 6 is a schematic side view of a mounting assembly according to an embodiment of the present disclosure.

### Detailed Description of the Drawings

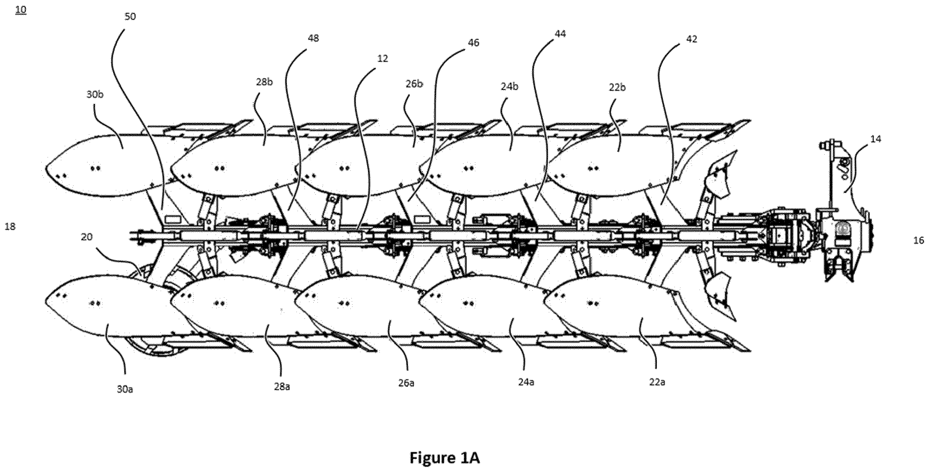

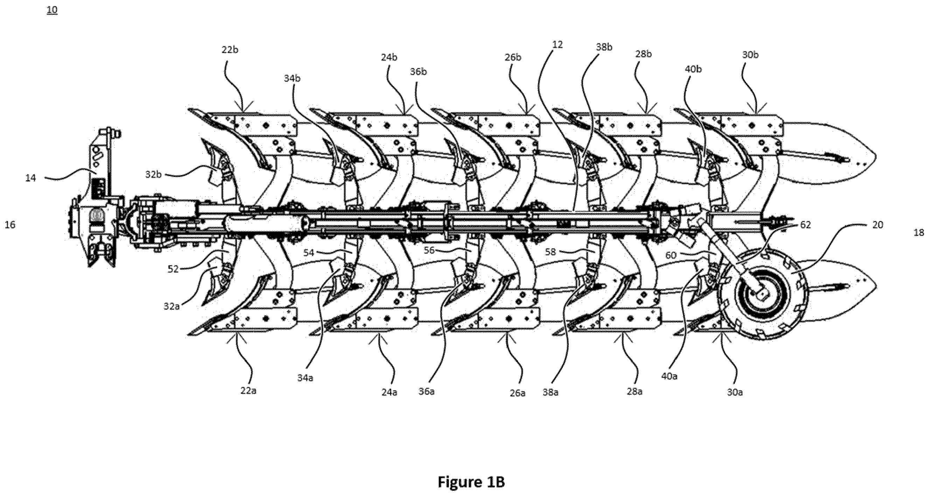

Figures 1A to 1C show various views of an agricultural implement, particularly a plough 10. As will be described in more detail below, the plough 10 shown in Figures 1A to 1C is a reversible plough.

The plough 10 comprises a main frame 12. The main frame 12 may be a rectangular tube extending between a headstock 14 at a front end 16 of the plough towards a plough wheel 20 at a rear end 18 of the plough. The main frame 12 supports a variety of ground-engaging tools. In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. Each of the plough bodies 22a, 22b, 24a, 24b, 26a, 26b, 28a, 28b, 30a, 30b are connected to the main frame 12 by means of beams 42, 44, 46, 48, 50. Each of the beams 42, 44, 46, 48, 50 has a substantially Y-shaped structure, because it connects two plough bodies to the main frame 12, as discussed below.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural vehicle, such as a tractor. It follows that each run of the illustrated plough 10 through a field creates five adjacent furrows.

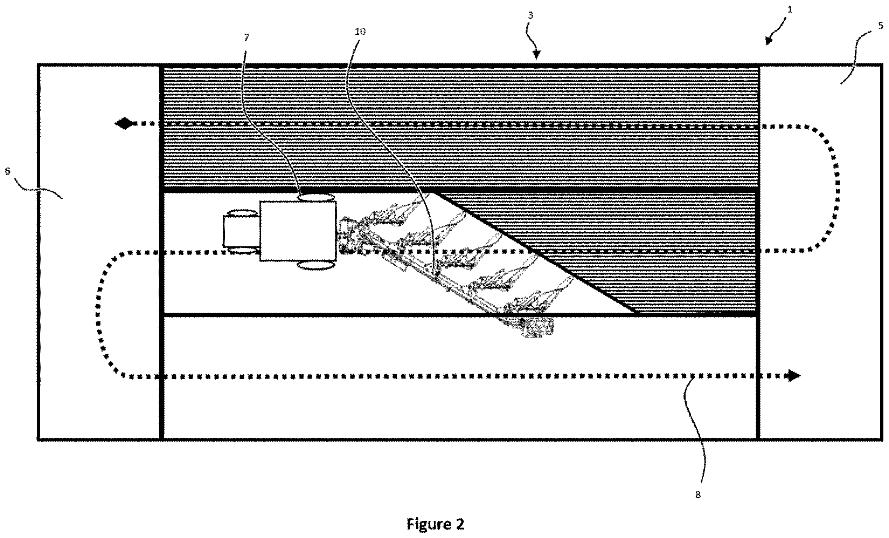

Turning to Figure 2, a typical operation of agricultural machinery comprising a tractor 7 and a plough 10 is described. In use, the plough 10 is drawn as an attachment (implement) behind an agricultural towing vehicle (e.g. tractor 7). It will be appreciated that it is equivalently feasible to locate the plough 10 in front of or both in front of and behind the tractor 7.

Figure 2 shows a schematic work area 1, e.g. a crop field, which is divided into a main field 3 and headlands 5,6. A tractor 7 draws the plough 10 across the main field 3 in generally parallel working rows. The working rows are part of the trajectory of the tractor and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row, the tractor 7 and plough 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5 and 6 more than necessary, it is known to lift the ground engaging tools, such as the plough bodies and the skimmers, off the ground into a headland or transfer position, just before the plough 10 reaches the headlands 5 or 6 respectively. Once the tractor 7 and the corresponding plough 10 have turned on the headland 5, 6, the ground engaging tools of the plough 10 are, again, lowered towards an operating position to engage the soil of the main field 3.

In the illustration of Figure 2, the plough 10 is working on the main field 3 and, therefore, is arranged in the operating position. As the plough 10 reaches the border between the headland 5/6 and the main field 3, the plough 10 is transferred to a transfer position. It follows that each working row starts with an adjustment of the plough from the transfer position into the operating position and ends with an adjustment of the plough from the operating position into the transfer position.

The plough 10 shown in Figures 1A to 1C is of the fully-mounted type. In fully-mounted ploughs, the weight of the plough is carried exclusively by the tractor when the plough is in its transfer position (on the headlands). In other words, the plough is then exclusively supported by the tractor 7 via headstock 14 and may be lifted off the ground with a lift cylinder of a tractor linkage.

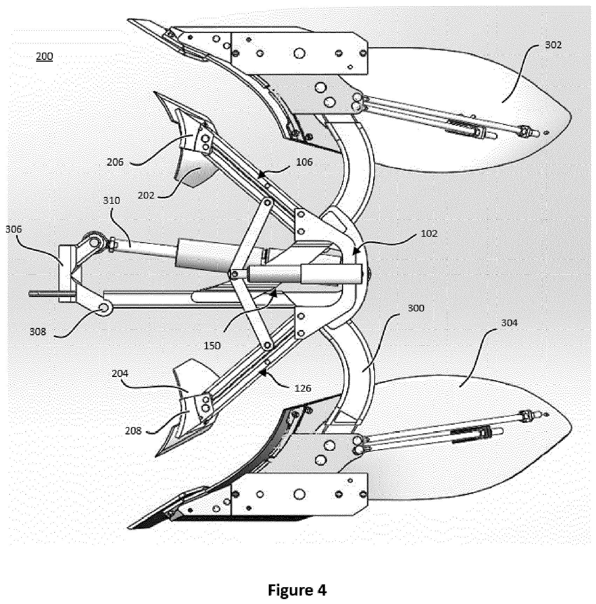

During the turning movement on the headlands, the plough 10 is also reversed. That is, the main frame 12 is rotated by about 180 degrees with respect to the headstock 14 to move the plough from a first configuration to a second configuration. It will be appreciated that if the operator is ploughing in the furrow (as shown in Figure 4), then the main frame 12 may not be rotated by exactly 180 degrees, it is more likely to be 190-200 degrees or 160-170 degrees depending on which direction the main frame 12 turns. If operator is ploughing on-land, then the main frame 12 may be rotated by an angle that is closer to 180 degrees, perhaps exactly 180 degrees.

In its first configuration shown in Figures 1A to 1C, the plough 10 is set up such that plough bodies 22a, 24a, 26a, 28a, and 30a of each of the pairs are in contact with the soil. This first configuration is shown in Figure 2 and sometimes referred to as the "right turning configuration", since the mouldboards of the plough bodies 22a, 24a, 26a, 28a and 30a are arranged to move the soil sideways from left to right when viewed in the direction of travel. In its second configuration (not illustrated), the plough 10 is set up such that plough bodies 22b, 24b, 26b, 28b, and 30b of each of the pairs are in contact with the soil. This second configuration is achieved after rotating the main frame by 180 degrees, such that the majority of plough bodies are arranged to the right of the tractor (not shown). It follows that the second configuration is also referred to as the "left turning configuration".

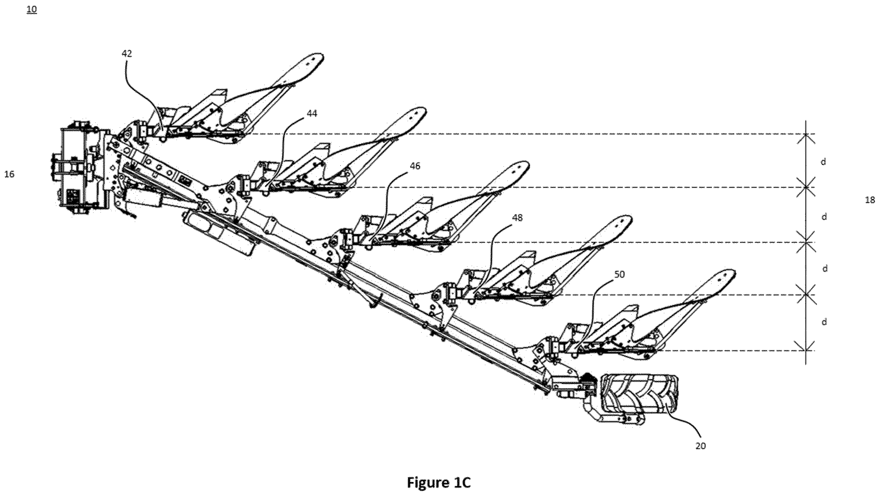

Tilling the field with the plough 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C.

As the reversible plough 10 reaches the end of the first run, the main frame 12 is rotated by 180 degrees (reversed) with respect to the headstock 14. A turning cylinder (not shown), attached to the headstock 14 is typically used to rotate (reverse) the plough 10. During rotation of the main frame, the first set of plough bodies, e.g. 22a, 24a, 26a, 28a, 30a, are transferred to the top of the plough 10. At the same time, the second set of plough bodies e.g. 22b, 24b, 26b, 28b, 30b that were not in use in the previous run is then transferred to the lower end of the plough 10 and will be submerged in the soil during the next run. The reversible plough is then in its second configuration (not shown).

Executing a second run of the field with the plough 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.
Reversing the plough 10 between consecutive runs has the advantage that the plough bodies 22a, 22b, 24a, 24b, 26a, 26b, 28a, 28b, 30a, 30b that engage the soil always face the same side edge of the main field 3, irrespective of the tractor's orientation.

In order to improve the ploughing results, skimmers 32a, 32b, 34a, 34b, 36a, 36b, 38a, 38b, 40a, 40b are attached in front of the plough bodies 22a, 22b, 24a, 24b, 26a, 26b, 28a, 28b, 30a, 30b. A first pair of skimmers 32a, 32b is arranged in front of the first pair of plough bodies 22a, 22b. A second pair of skimmers 34a, 34b is arranged in front of the second pair of plough bodies 24a, 24b. A third pair of skimmers 36a, 36b is attached in front of the third pair of plough bodies 26a, 26b. A fourth pair of skimmers 38a, 38b is attached in front of the fourth pair of plough bodies 28a, 28b. A fifth pair of skimmers 40a, 40b is attached in front of the fifth pair of plough bodies 30a, 30b.

The skimmers 32a, 32b, 34a, 34b, 36a, 36b, 38a, 38b, 40a, 40b are arranged higher than their corresponding plough bodies 22a, 22b, 24a, 24b, 26a, 26b, 28a, 28b, 30a, 30b to not penetrate the soil as far as the plough bodies. It follows that the skimmers 32a, 32b, 34a, 34b, 36a, 36b, 38a, 38b, 40a, 40b are configured to only lift a top layer off the ground surface before the soil is turned over by the plough body that is arranged immediately behind the skimmer.

In the embodiment of the plough shown in Figures 1A to 1C, each pair of skimmers 32a, 32b, 34a, 34b, 36a, 36b, 38a, 38b, 40a, 40b is attached to the main frame 12 by means of a mounting assembly 52, 54, 56, 58, 60.

The length of the mounting assemblies 52, 54, 56, 58, 60 determines the distance between the main frame 12 and the skimmers, and thus the working depth of the skimmers 32a, 32b, 34a, 34b, 36a, 36b, 38a, 38b, 40a, 40b. In more traditional ploughs, the length of the mounting assemblies 52, 54, 56, 58, 60 are non-adjustable. The same is true for the plough bodies 22a, 22b, 24a, 24b, 26a, 26b, 28a, 28b, 30a, 30b, as traditional beams 42, 44, 46, 48, 50 are not adjustable. It follows that, in more traditional ploughs, the working depth relationship between the plough bodies and the skimmers is fixed, such that the working depth of the skimmers and plough bodies may only be adjusted together.

Adjustment of the working depth of the skimmers 32a, 32b, 34a, 34b, 36a, 36b, 38a, 38b, 40a, 40b and the plough bodies 22a, 22b, 24a, 24b, 26a, 26b, 28a, 28b, 30a, 30b shown in Figures 1A to 1C during operation may be achieved by means of a linkage 62 that attaches the plough wheel 20 to the frame 12. As linkage 62 is shortened (e.g. by means of a hydraulic cylinder), the main frame 12 moves closer to the ground surface, thereby increasing the working depth of the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b (i.e. driving the skimmers and plough bodies deeper into the soil). The inverse is the case if linkage 62 is extended, such as the main frame 12 is distanced further from the ground surface, thereby pulling the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b out of the ground.

In order to provide some flexibility in the depth ratio between the plough bodies and the skimmers, the skimmer mounting assembly of the present disclosure allows for a working depth adjustment of the plough skimmers independently of the plough bodies. In other words, the mounting assembly renders the distance between the plough skimmers 32a, 32b, 34a, 34b, 36a, 36b, 38a, 38b, 40a, 40b and the main frame 12 adjustable.

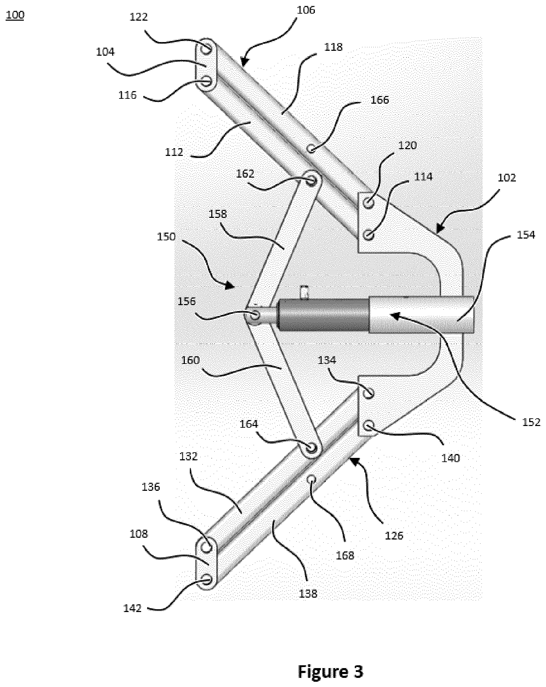

Turning to Figure 3, there is shown a schematic side view of a skimmer mounting assembly according to an embodiment of the present disclosure. The mounting assembly 100 comprises a base support 102. The base support 102 is connected to a first skimmer support 104 via a first parallelogram linkage 106. The first parallelogram linkage 106 extends between the base support 102 and the first skimmer support 104.

The mounting assembly 100 shown in Figure 3 is suitable for reversible ploughs, such as the plough shown in Figures 1A to 1C. Accordingly, the mounting assembly 100 comprises a second skimmer support 108. The second skimmer support 108 is connected to the base support 102 via a second parallelogram linkage 126. However, it will be appreciated that the mounting assembly of the present disclosure does not need to be configured for a reversible plough implement. Rather the mounting assembly may be suitable for a non-reversible plough only, in which case only one of the two skimmer supports 104, 108 and parallelogram linkages 106, 126 will be provided.

The base support 102 is configured to be connected to the frame of a plough implement. To this end, the base support 102 may include various openings for mounting the base support 102 directly onto the main frame of a plough implement. Alternatively, and as described in more detail with reference to Figure 4, the base support 102 may be mounted to the beam of a pair of plough bodies. The base support 102 may be connected to any part of a plough implement that enables a secure fixation of the mounting assembly with respect to the main frame.

The first parallelogram linkage 106 extending between the base support 102 and the first skimmer support 104 comprises two links. A first link 112 has a first end pivotally connected to the base support 102 via a first base support pivot 114. An opposite, second end of the first link 112 is pivotally connected to the first skimmer support 104 via a first skimmer support pivot 116. A second link 118 has a first end that is connected to the base support 102 via a second base support pivot 120. An opposite, second end of the second link 118 is connected to the first skimmer support 104 via a second skimmer support pivot 122.

The first and second links 112, 118 have the same length and are arranged in parallel. The first base support pivot 114 is spaced from the second base support pivot 120 by the same distance as the first skimmer support pivot 116 is spaced from the second skimmer support pivot 122. Accordingly, the first parallelogram linkage 106 is a four-bar parallelogram linkage. The first and second base support pivots 114, 120 are fixed pivots, i.e. the first and second base support pivots 114, 120 will remain at the same position during activation of the first parallelogram linkage 106. As the parallelogram linkage 106 is pivoted with respect to the base support 102, the first skimmer support 104 will maintain its orientation (vertical in this embodiment). Accordingly, the orientation of the skimmer attached to the first skimmer support 106 (Figure 4) will remain the same within the soil, despite a pivotal working depth adjustment achieved by means of the mounting assembly shown in Figure 3.

The second parallelogram linkage 126 extending between the base support 102 and the second skimmer support 108 comprises two links. A first link 132 has a first end pivotally connected to the base support 102 via a third base support pivot 134. An opposite, second end of the first link 132 is pivotally connected to the second skimmer support 108 via a first skimmer support pivot 136. A second link 138 has a first end that is connected to the base support 102 via a fourth base support pivot 140. An opposite, second end of the second link 138 is connected to the second skimmer support 108 via a second skimmer support pivot 142.

The first and second links 132, 138 of the second parallelogram linkage 126 have the same length and are arranged in parallel. The third base support pivot 134 is spaced from the fourth base support pivot 140 by the same distance as the first skimmer support pivot 136 is spaced from the second skimmer support pivot 142. Accordingly, the second parallelogram linkage 126 is a four-bar parallelogram linkage. The third and fourth base support pivots 134, 140 are fixed pivots, i.e. they will remain at the same position during activation of the second parallelogram linkage 126. As the second parallelogram linkage 126 is pivoted with respect to the base support 102, the second skimmer support 108 will maintain its orientation (vertical in this embodiment). Accordingly, the orientation of the skimmer attached to the second skimmer support 108 (Figure 4) will remain the same within the soil, despite a pivotal working depth adjustment achieved by means of the mounting assembly shown in Figure 3.

The mounting assembly shown in Figure 3 comprises an actuator mechanism 150. The actuator mechanism 150 is configured to pivot the first parallelogram linkage 106 and the second parallelogram linkage 126 with respect to the base support 102. To this end, the actuator mechanism 150 is arranged between the base support 102 and the first and second parallelogram linkages 106, 126.

The actuator mechanism 150 comprises a hydraulic actuator 152, i.e. a hydraulic cylinder. The hydraulic actuator 152 is connected to the base support 120 at a first end 154. At an opposite, second end 156, the hydraulic actuator 152 is connected to a mechanical synchronising means for synchronising the pivoting movement of the first and second parallelogram linkages 106, 126.

The synchronising means are configured to transfer any pivoting movement of the first parallelogram linkage 106 to the second parallelogram linkage 126 and vice versa. In other words, due to the synchronising means, the angle of the first parallelogram linkage 106 with respect to the frame of the plough, will always be identical to the angle of the second parallelogram linkage 126 with respect to the frame. When in use, the synchronising means, therefore, ensure that the skimmers attached to first and second skimmer supports 104, 108 will always be set to the same working depth. This is particularly useful after a turning event.

Consider a scenario in which the plough is set such that a first skimmer (e.g. skimmer 202 in Fig. 4) attached to the first skimmer support 104 is in contact with the soil, during a first run of the field. In this scenario, a second skimmer (e.g. skimmer 204 in Fig. 4) attached to the second skimmer support 108 is not in contact with the soil. If the user changes the working depth of the first skimmer (by pivoting the first parallelogram linkage 106), the position of the second skimmer is adjusted at the same time, albeit not within the soil. After the first run, when the plough implement is reversed on the headland, the first skimmer is removed from the soil and the second skimmer is inserted into the soil, ready for a second run of the field. Due to the synchronisation means, the second skimmer starts the second run with the same working depth that was set for the first skimmer at the end of the first run, thus providing consistent ploughing results in the left and right hand configuration of the plough.

In the embodiment of Figure 3, the mechanical synchronising means comprises a first synchronisation member 158 and a second synchronisation member 160. The first and second synchronisation members 158, 160, are first and second links that extend between the hydraulic actuator 152 and the first parallelogram linkage 106 or the second parallelogram linkage 126 respectively. In particular, the first synchronisation member 158 of this embodiment is a bar link that has a first end connected to a pivot arranged at the second end 156 of the hydraulic actuator 152. An opposite, second end of the first synchronisation member is pivotally connected to the first parallelogram linkage 106 via a pivot 162. The second synchronisation member 160 is a second bar link having a first end connected to the second end 156 of the hydraulic actuator 152. An opposite, second end of the second synchronisation member 160 is connected to the second parallelogram linkage 126 via a pivot 164.

In the embodiment of Figure 3, the first synchronisation member is connected to the first parallelogram linkage 106 via the pivot 162 arranged on the first link 112. Similarly, the second end of the second synchronisation member 160 is connected to a pivot of the first link 132 of the second parallelogram linkage 126. Of course, the first and second synchronisation members 158, 160 could also be connected to the second links 118, 138 of the first and second parallelogram linkage 106, 126 respectively. To this end, the second links 118, 138 may also be provided with pivots 166, 168.

In yet another embodiment, the first and second synchronisation members 158, 160 are connected to the first and second skimmer supports 104, 108 (not shown). For example, the second end of the first synchronisation member 158 may be connected to a pivot of the first skimmer support 104, whereas the second of the second synchronisation member 160 may be connected to a pivot of the second skimmer support 108.

Regarding the operation of the mounting assembly shown in Figure 3, it will be appreciated that the hydraulic actuator 152 is a double-acting hydraulic cylinder. Accordingly, the hydraulic actuator 152 can be actively extended and compressed as required.

Starting from the position of the mounting assembly shown in Figure 3, an extension of the hydraulic actuator 152 will act to reduce the obtuse angle between the first and second synchronisation members 158, 160. At the same time, this will cause the first and second parallelogram linkages 106, 126 to pivot towards the hydraulic actuator 152. Similarly, if the hydraulic actuator 152 in Figure 3 is compressed, the obtuse angle between the first and second synchronisation members 158, 160 is increased and the first and second parallelogram linkages 106, 126 are pivoted away from each other. It will be appreciated that such pivoting movement of the first and second parallelogram linkages 106, 126 is synchronised, i.e. both parallelogram linkages 106, 108 will always pivot together when the hydraulic actuator 152 is activated.

The hydraulic actuator 154 may be provided with end stops that limit the movement range of the hydraulic cylinder such that the angle between the first and second synchronisation members 158, 160 will remain between e.g. 90° and 180°.

In some embodiments, the actuator mechanism may not include mechanical synchronisation members. For example, the actuator mechanism could include two separate hydraulic actuators. A first hydraulic actuator may extend between the base support 102 and one of the first link 112, the second link 118, or the first skimmer support 104 of the first parallelogram linkage 106. A second hydraulic actuator may extend between the base support 102 and one of the first link 132, the second link 138, or the second skimmer support 108 of the second parallelogram linkage 126. In this example, synchronisation may be achieved via synchronised hydraulic fluid flow provided to the two hydraulic actuators.

Figure 4 shows an embodiment of a skimmer arrangement according to the present disclosure. The skimmer arrangement 200 is connected to a beam 300 of a pair of plough bodies 302, 304. In particular, the skimmer arrangement 200 is connected to the beam 300 via the base support 102 of the mounting assembly. The base support 102 is connected to the beam 300.

The skimmer arrangement 200 comprises the mounting assembly shown in Figure 3 and two skimmers 202, 204. A first skimmer 202 is connected to the first skimmer support (hidden in Figure 4) of the mounting assembly. The second skimmer 204 is connected to the second skimmer support (hidden in Figure 4) of the mounting assembly. In particular, the first skimmer 202 is connected to the first skimmer support via a first frog 206. Similarly, the second skimmer 204 is connected to the second skimmer support via a second frog 208.

The first and second skimmers 202, 204 are removably connected to the first and second skimmer supports. However, the first and second skimmers 202, 204 are fixed with respect to the skimmer supports, such that the first and second skimmers 202, 204 will not change their orientation with respect to the skimmer supports as the skimmers are in contact with/dragged through the soil.

As described with respect to Figure 3, the first and second parallelogram linkages 106, 126 can be pivoted with respect to the base support 102 by means of the actuator mechanism 150. If the first and second skimmers 202, 204 are pivoted towards each other, i.e. by extending the hydraulic actuator 152, the working depth of the skimmers can be reduced, e.g. up to a point at which the skimmers are completely removed from the soil. Similarly, if the skimmers 202, 204 are pivoted away from each other, i.e. by compressing the hydraulic actuator 152, the working depth of the skimmers within the soil can be increased.

It will be appreciated that any adjustment of the working depth of the skimmers by means of the mounting assembly 100 is independent of the working depth of the plough bodies 302, 304 or a position of the main frame (not shown).

The beam 300 is attached to the main frame (not shown) via a beam attachment bracket 306. The beam is pivotable in a vertical plane about a beam pivot 308. Such pivotal movement enables a stone-trip functionality, which is not the subject of this disclosure. However, it will be understood that the stone-trip functionality is regulated by the hydraulic actuator 310 shown in Figure 4. By attaching the skimmer arrangement 200 to the beam 300 of the agricultural plough, the stone-trip functionality provided for the plough bodies 302, 304 is extended to the skimmers 202, 204 also.

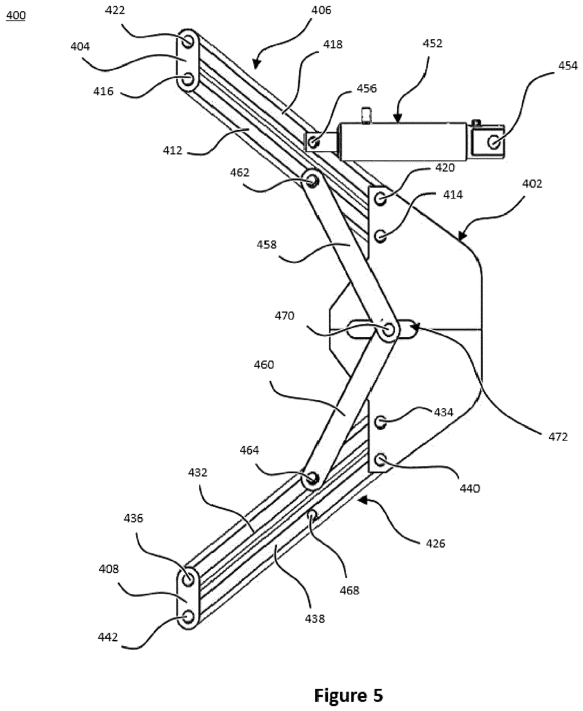

Turning to Figure 5, there is shown a schematic side view of a skimmer mounting assembly according to another embodiment of the present disclosure. The mounting assembly 400 comprises a base support 402. The base support 402 is connected to a first skimmer support 404 via a first parallelogram linkage 406. The first parallelogram linkage 406 extends between the base support 402 and the first skimmer support 404.

The mounting assembly 400 shown in Figure 5 is suitable for reversible ploughs, such as the plough shown in Figures 1A to 1C. Accordingly, the mounting assembly 400 also comprises a second skimmer support 408. The second skimmer support 408 is connected to the base support 402 via a second parallelogram linkage 426.

The base support 402 is configured to be connected to the frame of a plough implement. To this end, the base support 402 may include various openings (not shown) for mounting the base support 402 directly onto the main frame of a plough implement. Alternatively, the base support 402 may be mounted to the beam of a pair of plough bodies. The base support 402 may be connected to any part of a plough implement that enables a secure fixation of the mounting assembly with respect to the main frame.

The first parallelogram linkage 406 extending between the base support 402 and the first skimmer support 404 comprises two links. A first link 412 has a first end pivotally connected to the base support 402 via a first base support pivot 414. An opposite, second end of the first link 412 is pivotally connected to the first skimmer support 404 via a first skimmer support pivot 416. A second link 418 has a first end that is connected to the base support 402 via a second base support pivot 420. An opposite, second end of the second link 418 is connected to the first skimmer support 404 via a second skimmer support pivot 422.

The first and second links 412, 418 have the same length and are arranged in parallel. The first base support pivot 414 is spaced from the second base support pivot 420 by the same distance as the first skimmer support pivot 416 is spaced from the second skimmer support pivot 422. Accordingly, the first parallelogram linkage 406 is a four-bar parallelogram linkage. The first and second base support pivots 414, 420 are fixed pivots, i.e. the first and second base support pivots 414, 420 will remain at the same position during activation of the first parallelogram linkage 406. As the parallelogram linkage 406 is pivoted with respect to the base support 402, the first skimmer support 404 will maintain its orientation (vertical in this embodiment). Accordingly, the orientation of the skimmer attached to the first skimmer support 406 will remain the same within the soil, despite a pivotal working depth adjustment achieved by means of the mounting assembly shown in Figure 5.

The second parallelogram linkage 426 extending between the base support 402 and the second skimmer support 408 comprises two links. A first link 432 has a first end pivotally connected to the base support 402 via a third base support pivot 434. An opposite, second end of the first link 432 is pivotally connected to the second skimmer support 408 via a first skimmer support pivot 436. A second link 438 has a first end that is connected to the base support 402 via a fourth base support pivot 440. An opposite, second end of the second link 438 is connected to the second skimmer support 408 via a second skimmer support pivot 442.

The first and second links 432, 438 of the second parallelogram linkage 426 have the same length and are arranged in parallel. The third base support pivot 434 is spaced from the fourth base support pivot 440 by the same distance as the first skimmer support pivot 436 is spaced from the second skimmer support pivot 442. Accordingly, the second parallelogram linkage 426 is a four-bar parallelogram linkage. The third and fourth base support pivots 434, 440 are fixed pivots, i.e. they will remain at the same position during activation of the second parallelogram linkage 426. As the second parallelogram linkage 426 is pivoted with respect to the base support 402, the second skimmer support 408 will maintain its orientation (vertical in this embodiment). Accordingly, the orientation of the skimmer attached to the second skimmer support 408 will remain the same within the soil, despite a pivotal working depth adjustment achieved by means of the mounting assembly shown in Figure 5.

The mounting assembly shown in Figure 5 comprises an actuator mechanism. The actuator mechanism is configured to pivot the first parallelogram linkage 406 and the second parallelogram linkage 426 with respect to the base support 402.

The actuator mechanism comprises a hydraulic actuator 452, i.e. a hydraulic cylinder. The hydraulic actuator 452 is connected to the implement frame (not shown) at a first end 454. In particular, the first end 454 may be connected to a beam (cf. 300 in Figure 3) of a plough. At an opposite, second end 456, the hydraulic actuator 452 is connected to the first parallelogram linkage 406. In particular, the second end 456 of the actuator 452 of the embodiment shown in Figure 5 is pivotally connected to the second link 418 of the first parallelogram linkage. It should be understood, however, that the second end 456 of the actuator 452 may equivalently be connected to the first link 412 of the first parallelogram linkage. In fact, the second end 456 may be connected to the same pivot 462 as the first synchronisation member 458 described below. In alternative embodiments (not shown), the second end 456 of the actuator 452 may be connected to the second parallelogram linkage 426, e.g. via pivot 464 or pivot 468.

The actuator mechanism shown in Figure 5 comprises mechanical synchronising means. The mechanical synchronisation means include a first synchronisation member 458 and a second synchronisation member 460. The first and second synchronisation members 458, 460, are first and second links that extend between the base support 402 and the first parallelogram linkage 406 or the second parallelogram linkage 426 respectively. In particular, the first synchronisation member 458 of this embodiment is a bar link that has a first end pivotally connected to the base support 402. An opposite, second end of the first synchronisation member is pivotally connected to the first parallelogram linkage 406, particularly to the first link 412, via a pivot 462. The second synchronisation member 460 is a second bar link having a first end pivotally connected to the base support 402. An opposite, second end of the second synchronisation member 460 is connected to the second parallelogram linkage 426, particularly to the first link 432, via a pivot 464.

The first ends of the first and second synchronisation members 458, 460 are pivotally connected to each other via a pivot 470. The pivot 470 is slidably received in a longitudinal opening, i.e. a guide slot, 472. In other words, the first ends of the synchronisation members 458, 460 are able to slide, together with the pivot 470, in a longitudinal direction of the mounting assembly to allow for an adjustment of an angle between the synchronisation members 458, 460.

In the embodiment of Figure 5, a second end of the first synchronisation member is connected to the first parallelogram linkage 406 via the pivot 462 arranged on the first link 412. Similarly, a second end of the second synchronisation member 460 is connected to a pivot 464 of the first link 432 of the second parallelogram linkage 426. Of course, the first and second synchronisation members 458, 460 could also be connected to the second links 418, 438 of the first and second parallelogram linkage 406, 426 respectively. To this end, the second links 418, 438 may also be provided with pivots (only pivot 468 of second link 438 shown).

In yet another embodiment, the first and second synchronisation members 458, 460 are connected to the first and second skimmer supports 404, 408 (not shown). For example, the second end of the first synchronisation member 458 may be connected to a pivot of the first skimmer support 404, whereas the second of the second synchronisation member 460 may be connected to a pivot of the second skimmer support 408.

Regarding the operation of the mounting assembly shown in Figure 5, it will be appreciated that the hydraulic actuator 452 is a double-acting hydraulic cylinder. Accordingly, the hydraulic actuator 452 can be actively extended and compressed as required.

Starting from the position of the mounting assembly shown in Figure 5, an extension of the hydraulic actuator 452 will act to pivot the first parallelogram linkage 406 counter-clockwise in the illustration of Figure 5. Such pivotal movement of the first parallelogram linkage 406 will pivot the first synchronisation member 458 to pivot in counter-clockwise direction, causing the pivot 470 to slide to the right of Figure 5, within the longitudinal opening 472. Movement of the pivot 470 will cause a pivoting movement of the second synchronisation member 460 in a clockwise direction, thereby causing the second parallelogram linkage 426 to pivot in a clockwise direction too. In this way, the second parallelogram linkage 426 will be pivoted by the same angle as the first parallelogram linkage 406, yet in an opposite direction.

It follows from the above, that an extension of the hydraulic actuator 452 acts to reduce the obtuse angle between the first and second synchronisation members 458, 460, such that the first and second parallelogram linkages 406, 426 are pivoted towards each other. Similarly, if the hydraulic actuator 452 in Figure 5 is compressed, the obtuse angle between the first and second synchronisation members 458, 460 is increased and the first and second parallelogram linkages 406, 426 are pivoted away from each other. It will be appreciated that such pivoting movement of the first and second parallelogram linkages 406, 426 is synchronised, i.e. both parallelogram linkages 406, 408 will always pivot together when the hydraulic actuator 452 is activated.

The hydraulic actuator 454 may be provided with end stops that to limit the movement range of the hydraulic cylinder such that the angle between the first and second synchronisation members 458, 460 will remain e.g. between 90° and 180°.

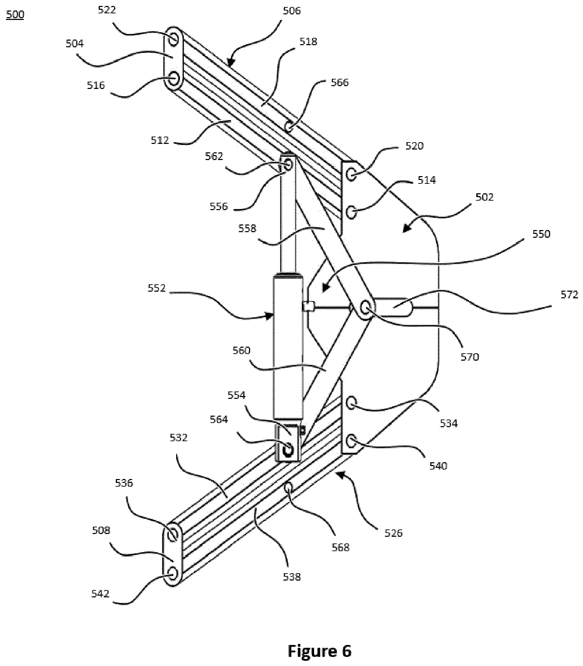

Figure 6 shows a schematic side view of a skimmer mounting assembly according to another embodiment of the present disclosure. The mounting assembly 500 comprises a base support 502. The base support 502 is connected to a first skimmer support 504 via a first parallelogram linkage 506. The first parallelogram linkage 506 extends between the base support 502 and the first skimmer support 504.

The mounting assembly 500 shown in Figure 6 is suitable for reversible ploughs, such as the plough shown in Figures 1A to 1C. Accordingly, the mounting assembly 500 also comprises a second skimmer support 508. The second skimmer support 508 is connected to the base support 502 via a second parallelogram linkage 526.

The base support 502 is configured to be connected to the frame of a plough implement (not shown). To this end, the base support 502 may include various openings (not shown) for mounting the base support 502 directly onto the main frame of a plough implement. Alternatively, the base support 502 may be mounted to the beam of a pair of plough bodies. The base support 502 may be connected to any part of a plough implement that enables a secure fixation of the mounting assembly with respect to the main frame.

The first parallelogram linkage 506 extending between the base support 502 and the first skimmer support 504 comprises two links. A first link 512 has a first end pivotally connected to the base support 502 via a first base support pivot 514. An opposite, second end of the first link 512 is pivotally connected to the first skimmer support 504 via a first skimmer support pivot 516. A second link 518 has a first end that is connected to the base support 502 via a second base support pivot 520. An opposite, second end of the second link 518 is connected to the first skimmer support 504 via a second skimmer support pivot 522.

The first and second links 512, 518 have the same length and are arranged in parallel. The first base support pivot 514 is spaced from the second base support pivot 520 by the same distance as the first skimmer support pivot 516 is spaced from the second skimmer support pivot 522. Accordingly, the first parallelogram linkage 506 is a four-bar parallelogram linkage. The first and second base support pivots 514, 520 are fixed pivots, i.e. the first and second base support pivots 514, 520 will remain at the same position during activation of the first parallelogram linkage 506. As the parallelogram linkage 506 is pivoted with respect to the base support 502, the first skimmer support 504 will maintain its orientation (vertical in this embodiment). Accordingly, the orientation of the skimmer attached to the first skimmer support 506 will remain the same within the soil, despite a pivotal working depth adjustment achieved by means of the mounting assembly shown in Figure 6.

The second parallelogram linkage 526 extending between the base support 502 and the second skimmer support 508 comprises two links. A first link 532 has a first end pivotally connected to the base support 502 via a third base support pivot 534. An opposite, second end of the first link 532 is pivotally connected to the second skimmer support 508 via a first skimmer support pivot 536. A second link 538 has a first end that is connected to the base support 502 via a fourth base support pivot 540. An opposite, second end of the second link 538 is connected to the second skimmer support 508 via a second skimmer support pivot 542.

The first and second links 532, 538 of the second parallelogram linkage 526 have the same length and are arranged in parallel. The third base support pivot 534 is spaced from the fourth base support pivot 540 by the same distance as the first skimmer support pivot 536 is spaced from the second skimmer support pivot 542. Accordingly, the second parallelogram linkage 526 is a four-bar parallelogram linkage. The third and fourth base support pivots 534, 540 are fixed pivots, i.e. they will remain at the same position during activation of the second parallelogram linkage 526. As the second parallelogram linkage 526 is pivoted with respect to the base support 502, the second skimmer support 508 will maintain its orientation (vertical in this embodiment). Accordingly, the orientation of the skimmer attached to the second skimmer support 508 will remain the same within the soil, despite a pivotal working depth adjustment achieved by means of the mounting assembly shown in Figure 6.

The mounting assembly shown in Figure 6 comprises an actuator mechanism 550. The actuator mechanism 550 is configured to pivot the first parallelogram linkage 506 and the second parallelogram linkage 526 with respect to the base support 502.

The actuator mechanism 550 comprises a hydraulic actuator 552, i.e. a hydraulic cylinder. The hydraulic actuator 552 is connected to the second parallelogram linkage 526 at a first end 554. In particular, the first end 554 may be to a pivot 564 of the first link 532 of the second parallelogram linkage 526. At an opposite, second end 556, the hydraulic actuator 552 is connected to the first parallelogram linkage 506. In particular, the second end 556 of the actuator 552 of the embodiment shown in Figure 6 is pivotally connected to the first link 512 of the first parallelogram linkage 506 via a pivot 562. It should be understood, however, that the ends 554, 556 of the actuator 552 may equivalently be connected to the second links 518, 538 of the first and second parallelogram linkages 506, 526.

The actuator mechanism shown in Figure 6 comprises mechanical synchronising means. The mechanical synchronisation means include a first synchronisation member 558 and a second synchronisation member 560. The first and second synchronisation members 558, 560, are first and second links that extend between the base support 502 and the first parallelogram linkage 506 or the second parallelogram linkage 526 respectively. In particular, the first synchronisation member 558 of this embodiment is a bar link that has a first end pivotally connected to the base support 502. An opposite, second end of the first synchronisation member is pivotally connected to the first parallelogram linkage 506, particularly to the first link 512, via a pivot 562. The second end of the first synchronisation member 558 is connected to the second end 556 of the hydraulic actuator 552 via the pivot 562. The second synchronisation member 560 is a second bar link having a first end pivotally connected to the base support 502. An opposite, second end of the second synchronisation member 560 is connected to the second parallelogram linkage 526, particularly to the first link 532, via a pivot 564. The second end of the second synchronisation member 560 is connected to the first end 554 of the hydraulic actuator 552 via the pivot 564.

The first ends of the first and second synchronisation members 558, 560 are pivotally connected to each other via a pivot 570. The pivot 570 is slidably received in a longitudinal opening, i.e. a guide slot, 572. In other words, the first ends of the synchronisation members 558, 560 are able to slide, together with the pivot 570, in a longitudinal direction of the mounting assembly to allow for an adjustment of an angle between the synchronisation members 558, 560.

In the embodiment of Figure 6, a second end of the first synchronisation member is connected to the first parallelogram linkage 506 via the pivot 562 arranged on the first link 512. Similarly, a second end of the second synchronisation member 560 is connected to a pivot 564 of the first link 532 of the second parallelogram linkage 526. Of course, the first and second synchronisation members 558, 560 could also be connected to the second links 518, 538 of the first and second parallelogram linkage 506, 526 respectively. To this end, the second links 518, 538 may also be provided with pivots 566, 568.

Regarding the operation of the mounting assembly shown in Figure 6, it will be appreciated that the hydraulic actuator 552 is a double-acting hydraulic cylinder. Accordingly, the hydraulic actuator 552 can be actively extended and compressed as required.

Starting from the position of the mounting assembly shown in Figure 6, an extension of the hydraulic actuator 552 will acts to increase the obtuse angle between the first and second synchronisation members 558, 560, such that the first and second parallelogram linkages 506, 526 are pivoted away from each other. Similarly, if the hydraulic actuator 552 in Figure 6 is compressed, the obtuse angle between the first and second synchronisation members 558, 560 is decreased and the first and second parallelogram linkages 506, 526 are pivoted towards each other. It will be appreciated that such pivoting movement of the first and second parallelogram linkages 506, 526 is synchronised, i.e. both parallelogram linkages 506, 508 will always pivot together when the hydraulic actuator 552 is activated.

The hydraulic actuator 554 may be provided with end stops that to limit the movement range of the hydraulic cylinder such that the angle between the first and second synchronisation members 558, 560 will remain between e.g. 90° and 180°.

The listing or discussion of an apparently prior-published document in this specification should not necessarily be taken as an acknowledgement that the document is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the disclosure.

## Claims

1. A mounting assembly (100, 400, 500) for a plough skimmer, the mounting assembly (100, 400, 500) comprising:
a base support (102, 402, 502) for connecting the mounting assembly (100, 400, 500) to a plough implement;
a first skimmer support (104, 404, 504) for removably connecting a first skimmer (202) to the mounting assembly (100, 400, 500); and
a first parallelogram linkage (106, 406, 506) extending between the base support (102, 402, 502) and the first skimmer support (104, 404, 504), said first parallelogram linkage (106, 406, 506) being pivotable with respect the base support (102, 402, 502).

2. The mounting assembly (100, 400, 500) of Claim 1, wherein the first parallelogram linkage (106, 406, 506) comprises
a first link (112, 412, 512) having a first end pivotally connected to the base support (102, 402, 502) and a second end pivotally connected to the first skimmer support (104, 404, 504);
a second link (118, 418, 518) having a first end pivotally connected to the base support (102, 402, 502) and a second end pivotally connected to the first skimmer support (104, 404, 504),
wherein the first and second links have the same length and are arranged in parallel.

3. The mounting assembly (100, 400, 500) of Claim 2, wherein the first skimmer support (104, 404, 504) is a bar link extending between the second ends of the first and second links (112, 118, 412, 418, 512, 518).

4. The mounting assembly (100, 400, 500) of Claim 2 or 3, wherein the first end of the first link (112, 412, 512) is spaced from the first end of the second link by a distance that is equal to a distance between the second end of the first link (112, 412, 512) and the second end of the second link.

5. The mounting assembly (100, 400, 500) of any one of Claims 1 to 4, comprising an actuator mechanism (150, 550) configured to pivot the first parallelogram linkage (106, 406, 506) with respect to the base support (102, 402, 502).

6. The mounting assembly (100, 400, 500) of any one of Claims 1 to 5, wherein the mounting assembly comprises:
a second skimmer support (108, 408, 508) for removably connecting a second plough skimmer to the mounting assembly (100, 400, 500); and
a second parallelogram linkage (126, 426, 526) extending between the base support (102, 402, 502) and the second skimmer support (108, 408, 508), said parallelogram linkage being pivotable with respect the base support (102, 402, 502).

7. The mounting assembly (100, 400, 500) of Claim 6, when dependent on Claim 5, wherein the actuator mechanism (150, 550) is configured to pivot the second parallelogram linkage (126, 426, 526) with respect to the base support (102, 402, 502).

8. The mounting assembly (100, 400, 500) of any one of Claims 5 to 7, wherein the actuator mechanism (150, 550) comprises a telescopic actuator for pivoting the first parallelogram linkage (106, 406, 506) with respect to the base support (102, 402, 502).

9. The mounting assembly (100, 400, 500) of any of Claims 6 to 8, wherein the actuator mechanism (150, 550) comprises synchronising means for synchronising pivoting movement of the first and second parallelogram linkage (126, 426, 526).

10. The mounting assembly (100, 400, 500) of Claim 9, wherein the synchronising means comprises:
a first synchronisation member (158, 458, 558) having a first end and a second end, the second end being pivotally connected to the first parallelogram linkage (106, 406, 506); and
a second synchronisation member (160, 460, 560) having a first end pivotally connected to the first end of the first synchronisation member (158, 458, 558) and a second end pivotally connected to the second parallelogram linkage (126, 426, 526).

11. The mounting assembly (100) of Claim 10, wherein the actuator mechanism (150) comprises a telescopic actuator, and wherein the first ends of the first and second synchronisation members (158, 160) are connected to the telescopic actuator.

12. The mounting assembly (400, 500) of Claim 10, wherein the first ends of the first and second synchronisation members are connected to the base support (402, 502), preferably via a longitudinal opening of the base support (402, 502).

13. The mounting assembly (400, 500) of Claim 10 or 12, wherein the actuator mechanism (150, 550) comprises a telescopic actuator (452, 552),
wherein the telescopic actuator (452) has at least one end connected to the first or the second parallelogram linkage, or
wherein the telescopic actuator (552) has a first end connected to the first parallelogram linkage (506) and a second end connected to the second parallelogram linkage (526).

14. A skimmer arrangement (200) comprising the mounting assembly (100, 400, 500) of any one of Claims 1 to 13 and an agricultural skimmer (202) attached to the first skimmer support (104, 404, 504).

15. An agricultural plough implement, comprising:
a plough main frame;
a plough body attached to the plough main frame via a beam; and
the skimmer arrangement (200) of Claim 14, wherein the base support (102, 402, 502) of the skimmer arrangement (200) is arranged on the beam.
